# EUROPEAN PATENT APPLICATION

(11) **EP 2 287 538 A1**
(43) Date of publication of application: **23.02.2011**
(21) Application number: 09380131.4
(22) Date of filing: 07.07.2009
(51) Int. Cl.: F24F 13/00

(54) **Connecting part for ventilation ducts and such like**

(71) Applicant: Conductos Denia, S.L., 03750 Pedreguer Alicante (ES)
(72) Inventor: Durá Baidal, Victor, 03750 Pedrequer (Alicante) (ES)
(74) Representative: Riera Blanco, Juan Carlos

(57) **Abstract**

A connecting part for the connection of adjoining tubes in a ventilation system or such like is disclosed, of quick connection and by means whereof the air is channelled thereby reducing turbulences and noises, and the part especially designed for the evacuation of water coming from condensates associated with the interior flow or small undesired leakages. The part comprises a body of general cylindrical shape, in the interior whereof is an internal tubular formation, concentric with the longitudinal axis, joined to the internal face of the wall of the body and equipped with a central passage of substantially smaller diameter with respect to the diameter of the body. The linking of the internal tubular portion with the wall of the body is performed through a bottom portion of transversal wall, in the form of surrounding channelling in the shape of a circular crown, and which provides a collection space of the water which is evacuated to the exterior through small through holes made in the wall of the body itself.

## Description

### Object of the Invention

The present invention relates to a connecting part for ventilation ducts and such like, which provides essential characteristics with novel and notable advantages with respect to the means known and used for the same purposes in the current state of the art.

More specifically, the invention proposes the development of a part especially designed to be inserted between the facing adjoining ends, adjacent, of two tubes which have to be connected to each other, whose part facilitates the splicing operation of the tubes and contributes substantial advantages as regards noise reduction, air channelling and turbulence reduction. The part is designed so that it features two spans which couple to the respective ends of the tubes to be connected, and an internal tubular formation which reduces the passage diameter in the connection area, wherein the difference in diameter between the internal tubular formation and the diameter of the external wall of the part determine a circular channelling which is open towards the upper part, which constitutes an especially suitable means for the collection of water coming from condensates and small seepages which may possibly appear inside the tubes, to be evacuated towards the exterior. The part has a multiplicity of through holes for this purpose, formed through the lateral wall of the part in peripherally aligned positions along a line next to the bottom of the internal sleeve.

The field of application of the invention is comprised within the industrial sector dedicated to the manufacture and/or installation of ventilation ducts and such like.

### Background and Summary of the Invention

The existence of multiple systems intended for ventilation operations for the purposes of the extraction of heat, dust, smoke, gases, condensation, odours, etc., are generally known by all, for the creation of a more habitable environment in the place of installation. These types of systems can especially be used in all types of volumes and environments, such as warehouses, industrial bays, work premises, factories, sports centres, etc.

In general, the ventilation systems consist of ducts disposed so that they follow ascending routes in general, and vertical in particular, so that the expulsion of the gases, smoke, vapours, etc. is carried out in an upwards direction. To do that, depending on the type of matter that one wishes to expel, the systems frequently include complementary elements which help the forced ventilation of the desired environment, such as fans and extractors designed especially for that purpose, while other times it is the nature of the matter to be expelled which rises by itself in virtue of its density or even by a venturi effect to the circulation of the exterior winds.

In any of the cases, a ventilation system is made up of a number of tubular elements, with generally rectangular sections, or of other type, coupled successively to each other, extended between the volume which is to be ventilated and an open air exterior position, at a pre-determined height. The coupling between tubular elements gives rise to the formation of connections which are currently made with the help of flanges, sleeves, clamps and others of similar nature. Although they normally have some opening body which covers the exit portal at the upper end of the system, the entrance of rain water or condensation of water vapour particles dragged along by smoke or other gases is inevitable. The condensate water inevitably falls due to the effects of gravity, which constitutes a clear drawback. Furthermore, the circulation of the fluids inside the piping frequently gives rise to the creation of turbulences which translate into noises which must be prevented, to the point in which spans of silencing tubes are included in some systems to prevent this particular drawback.

Bearing in mind the problems associated with currently existing ventilation systems, the main objective proposed by the present invention is the development of a connecting part which permits the favourable resolution of the aforementioned drawbacks. This objective has been fully reached by means of the connecting part which will be described below, and whose main characteristics are gathered in the characterizing portion of the attached claim 1.

The proposal of the present invention essentially consists of the development of a part intended to serve as a connecting means in the coupling between successive tubes of a ventilation system, by means whereof the turbulences are eliminated, the noises derived from the latter are considerably reduced and the greater part of the condensates which originate inside the tubes are collected. To do that, the connecting part object of the invention constitutes a splicing element between tubes, and is designed so that it features an internal tubular formation, of smaller diameter, which is concentric with the exterior cylindrical wall of the part; with this configuration, once the part is coupled by means of both portions of external tubular wall between the respective facing adjacent ends of two consecutive tubular elements of the ventilation system, the internal tubular formation constitutes a tapering of the interior passage which causes an acceleration in the velocity of the exit gases, and consequently a reduction or elimination of the possible turbulences, while said internal tubular formation, designed from the inner surface of the cylindrical peripheral wall of the part with a pre-determined diameter reduction, gives rise to the formation of a circular space, as surrounding channelling, delimited by the inner surface of the cylindrical wall itself, open at its upper end, which the drops of water, which could be condensed from the evacuated gases or even originating from the small seepages derived from rain water or such like, drain towards through the interior wall of the tubes. This water collected by said surrounding channelling of the internal tubular formation can be evacuated towards the exterior thanks to the provision of a number of through holes made in the exterior wall of the part, aligned circumferentially next to the bottom of the space provided for said surrounding channelling. This prevents the water from descending down the inside of the tubes towards the ventilated space.

### Brief Description of the Drawings

These and other characteristics and advantages of the invention will be stated more clearly in the following detailed description of a solely illustrative and non-limitative example of preferred embodiment thereof, referring to the accompanying drawings, wherein:
- fig. 1: is an elevational view of a connecting part made in accordance with a preferred embodiment of the present invention;
- fig. 2: is an upper plan view of the part from Figure 1; and
- fig. 3: is a schematic view of an example of use of the part of the invention, to connect two consecutive tubes.

### Description of a Form of Preferred Embodiment

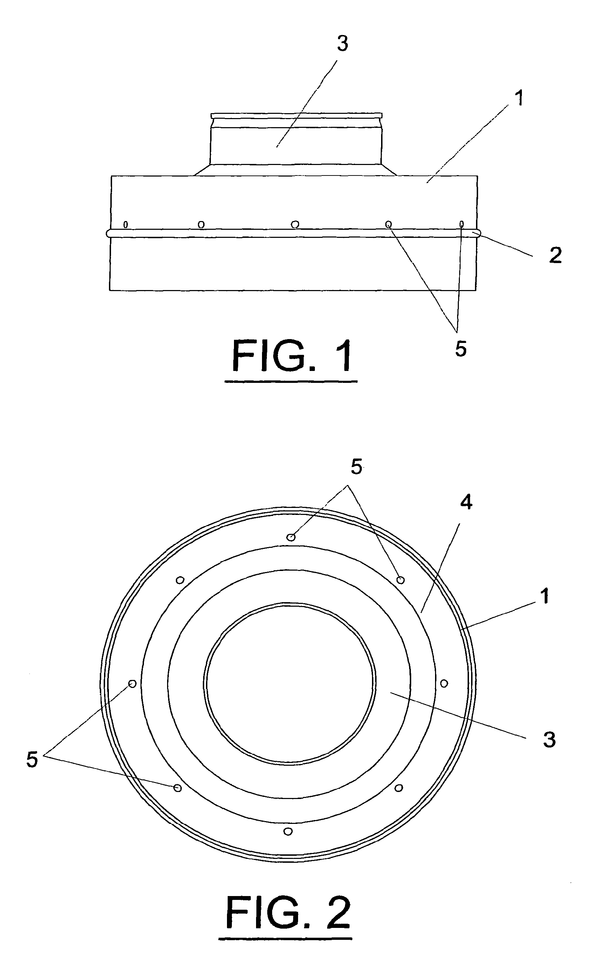

As has been mentioned above, the detailed description of the form of preferred embodiment of the connecting part of the present invention is going to be carried out below with the help of the attached drawings, wherethrough the same numeric references will be used to designate the equal or equivalent parts. In this sense, in view of the representation of Figure 1, a side elevational view is observed of a connecting piece made up by a body 1 of generally cylindrically shape, open at both bases and of relatively short height, which in an intermediate position features a fold determining a rib 2 which peripherally reinforces the structure of the wall of the body 1, which it considerably protrudes from through the external face. On the inside, the part features an internal tubular formation 3, axially concentric with the body, designed in longitudinal direction towards one of the bases of the cylindrical body 1 and extended to a substantially greater height than the height of the cylindrical wall of the body 1, as is observed in the elevational representation of Figure 1.

As shown in Figure 2, said internal tubular formation 2 comprises an open central portion constituting a passage for the gases which circulate through the interior of the tubes to those which couple, with a diameter which narrows in an upward direction to strangulate the passage and increase the evacuation speed of the outlet flow. In the lowest part, this concentric formation determines a portion of lower wall 4 or bottom, of transversal positioning with respect to longitudinal axis of the body 1, in the form of surrounding channelling with a circular crown shaped cross-section, by means whereof the internal tubular formation is solidly joined to the lower face of the cylindrical wall of the body 1, so that the wall of the body is divided at height in two tubular portions or spans intended to couple to the respective adjacent ends of the tubes which take part in the connection. The formation of a row of through holes 5 has been provided for next to the bottom 4, through the wall of the body 1, intended to permit the evacuation of the water coming from the condensates or possible seepages which descend down the inside of the tubes and which are deposited on the base portion 4 or bottom of the channelling which peripherally surrounds the internal tubular formation 3.

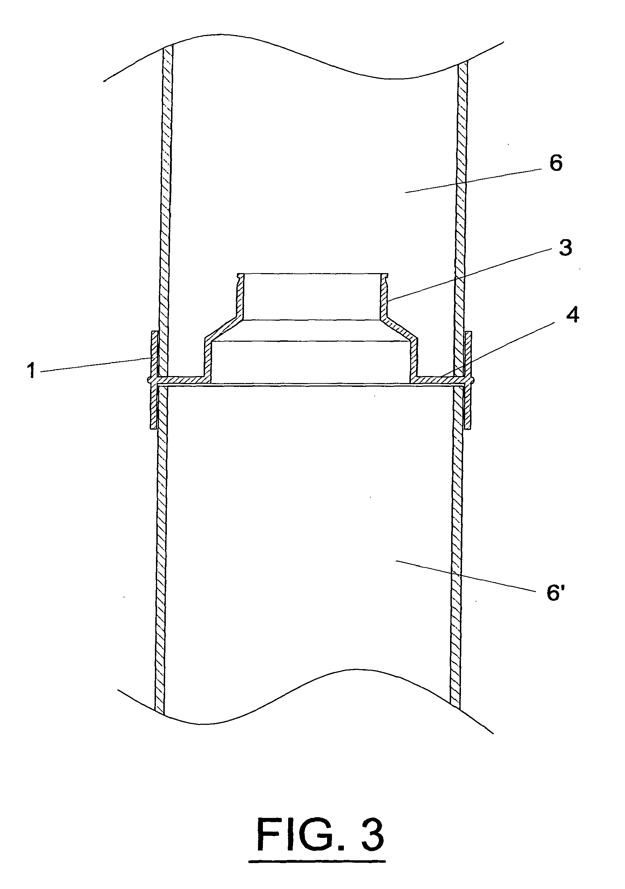

An illustrative schematic representation of the connecting part of the invention in operative state is shown in Figure 3. In accordance with this representation, it is observed that the cylindrical part 1 receives a tube 6, 6' through each one of the bases of the cylinder, respectively, to be mutually communicated. One respective end of each one of the tubes 6, 6' accesses the interior of the part through each one of the open bases of the body 1, the introduction of each end portion towards the interior of the connecting part being limited by the aforementioned bottom wall portion 4 of the surrounding channelling of the internal tubular formation 3. In those conditions, the narrowest passage caused by the decreasing diameter of the internal tubular formation 3 is clearly observed, and the consequent acceleration in the outlet fluid which that is going to give rise to, with the previously mentioned advantages above.

In accordance with the representation, the internal tubular formation 3 features a profile of wall in longitudinal transversal section formed by two cylindrical spans and an intermediate truncated conical span. This constructive shape must be interpreted solely as an example of embodiment, given that it could adopt profiles with other configurations, such as adopting a completely cylindrical shape or adopting a truncated conical shape with a pre-established angle of conicity. The internal tubular formation, concentric, made in the part of the invention, has also shown to especially be suitable for the purposes pursued by those other configurations.

It is not considered necessary to further explain the content of the present description for a person skilled in the art to be able to understand the scope thereof and the advantages derived therefrom, or to carry out the practical embodiment of its object.

Notwithstanding the above, and given that the description given solely corresponds to an example of preferred embodiment, it shall be understood that within its essentiality, multiple detailed modifications and variations can be introduced, also understood as within the scope of the invention, and which could particularly affect characteristics such as the shape, the size or the manufacturing materials, or any others which do not alter the invention as it has been described herein and as defined in the following claims.

## Claims

1. Connecting part for ventilation ducts and such like, especially designed to join or splice the respective adjacent ends of two consecutive tubular elements, aligned and facing each other, of a ventilation system or such like for coupling to said respective adjacent ends of two tubes (6, 6') wherebetween the connection is to be established, **characterized in that** it consists of a body (1) of generally cylindrical shape, open at both bases and of relatively short height, wherethrough each one of the bases whereof the coupling of both tubes (6, 6') of the connection is made, whose body (1) has an interior tubular formation (3), concentric with the longitudinal axis of the body, linked to the internal face of the cylindrical wall of the body (1) at an approximately intermediate height, whose internal tubular formation (3) is of a height so that it considerably protrudes at height at one of the ends of said body (1), the aforementioned internal tubular formation (3) being configured so that it features a portion of bottom wall (4) which links the internal face of the cylindrical wall of the body (1), positioned transversally to the longitudinal axis of the body (1), which determines a surrounding channelling in the shape of a circular crown, and wherefrom is designed the passage area of said internal tubular formation (3) with a diameter which is substantially smaller than that of the body (1).

2. Connecting piece according to claim 1, **characterized in that** it comprises a multiplicity of through holes (5) made in the cylindrical wall of the body (1), aligned circumferentially in positions adjacent to the portion of bottom wall (4) of the surrounding channelling of the internal tubular formation (3), constituting evacuation holes for the water deposited on said bottom (4) which comes from the undesired condensates or small seepages.

## Amended claims

### Amended claims in accordance with Rule 137(2) EPC.

**1.** Connecting part for ventilation ducts and such like, especially designed to join or splice the respective adjacent ends of two consecutive tubular elements, aligned and facing to each other, of a ventilation system or such like for coupling to said respective adjacent ends of two tubes (6, 6') wherebetween the connection is to be established, the connecting part comprising a body (1) of generally cylindrical shape open at both bases and being of relatively short height, wherethrough each one of the bases whereof the coupling to both tubes (6, 6') of the connection is made,
**characterized in that** said body (1) has an interior tubular formation (3), concentric with the longitudinal axis of the body, linked to the internal face of the cylindrical wall of the body (1) at an approximately intermediate height, whose internal tubular formation (3) is of a height such that it considerably protrudes at height at one of the ends of said body (1), the aforementioned internal tubular formation (3) being configured so that it features a portion of bottom wall (4) linked to the internal face of the cylindrical wall of the body (1), positioned transversally to the longitudinal axis of the body (1), which determines a surrounding channeling in the shape of a circular crown, and wherefrom is designed the passage area of said internal tubular formation (3) with a diameter which is substantially smaller than that of the body (1), with the cylindrical wall of the body (1) comprising a multiplicity of holes (5) circumferentially aligned in positions adjacent the portion of the bottom wall (4) of the surrounding channeling of the internal tubular formation (3), with said holes (5) providing holes to evacuate the water deposited on said bottom wall (4) which comes from the undesired condensates or small seepages.
